# EUROPEAN PATENT APPLICATION

(11) **EP 2 565 442 A1**
(43) Date of publication of application: **06.03.2013**
(21) Application number: 11180029.8
(22) Date of filing: 05.09.2011
(51) Int. Cl.: F03D 7/04

(54) **System and method for operating a wind turbine using adaptive reference variables**

(71) Applicant: SIEMENS AKTIENGESELLSCHAFT, 80333 München (DE)
(72) Inventor: Esbensen, Thomas, 7400 Herning (DK); Hoegh, Gustav, 7400 Herning (DK); Krishna, Ramakrishnan, 6900 Skjern (DK)

(57) **Abstract**

It is described an arrangement (100) for determining a target value of an operational variable of a wind turbine (136), the arrangement comprising: at least one input terminal (104) for receiving at least one operational parameter (106) of the wind turbine; a determining unit (108, 110, 116, 120) adapted to determine a target value of an operational variable of the wind turbine based on the operational parameter. Further, a corresponding method and a wind turbine are described.

## Description

### Field of invention

The present invention relates to an arrangement and to a method for determining a target value of an operational variable of a wind turbine and to a wind turbine comprising the arrangement.

### Art Background

A wind turbine may be operated by supplying target settings (also known as set points or references) to the wind turbine controller.

Herein the term "references" or "target setting" is used in the following sense: The wind turbine controller operates according to some reference values or target settings that may typically be a maximum power and a maximum rotational speed. The "references" or "target values" are thus just the targets (maximum value) of the control strategy.

In order for the wind turbine controller to perform the control strategy, the controller sends control signals to the actuators. These control signals may conventionally also be denoted as references and are primarily "a pitch reference", "a torque or power reference" (and "some control signal for the yaw system"). In the following we will call signals sent from the wind turbine controller to the actuators (wind turbine actuator) "control signals", to distinguish them from the "references" or "target setting" which indicate maximal values, in particular maximum power and a maximum rotational speed.

According to the target settings, the wind turbine may adapt its operational state, in particular, regarding power production, rotational speed, torque, voltage of the generated electric power, etc.

Traditionally, wind turbines have been operated using a fixed target rotational speed and a fixed target power. A conventional turbine controller may aim to hold this speed and power at high wind speeds (there has to be sufficient winds in order to operate at these targets, otherwise the speed and/or power will be lower). Conventionally, the maximum speed and power are typically chosen in order to reduce structural loads and not to overload the electrical components.

Since the target speed and the target power (also denoted the speed and power set points or speed and power references) are fixed, they are very likely to be too conservative, since they have to consider worst-case wind speeds, turbulence, wind shear, ambient temperatures, etc.. Thus, in fact, the wind turbine may be operated above the fixed references without impairing the wind turbine.

In a conventional system, the wind turbine may be operated by supplying a fixed target rotational speed and a fixed target power to the wind turbine controller. Thereby, it has been observed that the efficiency of the turbine is not satisfactory and/or that the turbine is not fully utilized (the design capacity is not fully exploited), especially in mild (perfect) conditions.

There may be a need for an arrangement and for a method for determining a target value of an operational variable of a wind turbine, which target value of the operational variable may then be used to control a wind turbine, in order to improve the efficiency of the wind turbine, in particular regarding power production. Further, the target value of the operational variable may be used in order to reduce noise emissions of the wind turbine and reduce mechanical and/or electronic loads of the wind turbine components, while at the same time the power production of the wind turbine is maximized.

### Summary of the Invention

The need may be satisfied by the subject-matter of the independent claims.

According to an embodiment of the present invention, an arrangement (in particular comprising an electronic circuit, a computer program, and/or a data carrier storing the computer program) for determining (in particular comprising computing, calculating, deriving, estimating, and/or outputting) a target value (in particular comprising a power set point or target value, a torque set point or target value and/or a speed set point or target value, wherein the set point may define maximal values of the respective operational variables, wherein the wind turbine should be operated not to exceed these maximal values) of an operational variable (the operational variable in particular comprising a variable defining or setting an operational state of the wind turbine, such as power and/or torque and/or rotor speed and/or generator speed) of a wind turbine is provided. Thereby, the arrangement comprises at least one input terminal (in particular an electrical and/or optical input terminal) for receiving at least one operational parameter (or a plurality of operational parameters, the operational parameters defining or representing an actual operational state of the wind turbine) of the wind turbine; and a determining unit (in particular comprising an electronic circuit and/or a computer program product, in particular comprised in a wind turbine controller) to determine (in particular comprising computing, calculating, estimating, determining using modelling) a target value (also called a set point, been an intended maximal value, at which the wind turbine may be operated without deteriorating the wind turbine, such that the target value is not superseded during operation of the wind turbine) of an operational variable (a variable, which may set an intended operational state of the wind turbine) of the wind turbine based on the operational parameter.

In particular, when the operational parameter changes, the target value of the operational variable of the wind turbine may be determined by the determining unit to change. In particular, thus, the target of the operational variable of the wind turbine, is not a fixed, predetermined value, but may be adapted depending on the operational actual condition the wind turbine is operating in. Thereby, the efficiency of the wind turbine may be improved, in particular regarding power production, while at the same time local requirements, such as noise requirements, voltage requirements or other electric requirements may be met. In particular, the target value of the operational variable may be higher than the fixed target value according to the prior art.

In particular, the arrangement may be adapted for receiving a plurality of operational parameters of the wind turbine and the target value of the operational variable may be determined based on the particular combination of the received operational parameters. In particular, to each particular combination of operational parameters, a particular target value may be associated. In particular, the operational parameters may reflect as accurate as possible the actual operational state of the wind turbine, the operational parameters including in particular external operational parameters, such as temperature, humidity, air density, turbulence, etc. and/or internal operational parameters, such as rotational speed, generated power, torque, generated voltage, generated current, generated reactive power, generated active power, actual mechanical and/or electronic load, etc. Thereby, for determining the target value of the operational variable, the plurality of operational parameters may be taken into account, in particular aiming for maximizing power production of the wind turbine, while at the same time satisfying local requirements, in particular regarding noise emissions, voltage at the point of commons coupling, reactive power, active power, etc. and/or also satisfying load constraints.

According to an embodiment of the present invention the operational variable comprises a power-related operational variable (the electrical power being generated by the wind turbine), in particular a power or a torque of the generator of the wind turbine and/or a rotational speed-related operational variable, in particular a generator speed or a rotor speed. Using these operational variables, the wind turbine may be conveniently controlled to achieve an intended operational state such as not to exceed the target value of the operational variable. Thereby, the arrangement for determining the target value may be advantageously employed for controlling a wind turbine.

According to an embodiment of the present invention, the operational parameter of the wind turbine comprises one or more of the following: an ambient temperature (in particular, a temperature around the wind turbine); a wind speed (in particular, a wind speed measured close to the wind turbine or estimated); an icing condition (in particular, being determined or measured close to the wind turbine or close to a blade of the wind turbine); a turbulence (in particular, determined by measuring a turbulence of air around the wind turbine); an air density (in particular, obtained by measuring or approximating the density of air around the wind turbine); a humidity (in particular, obtained by measuring the humidity of air around the wind turbine); a vibration condition of the wind turbine (in particular, obtained by measuring vibrations of the entire turbine or a portion of the turbine), in particular a blade vibration (in particular, a longitudinal blade vibration); a noise parameter indicative of a required and/or actual noise generated by the wind turbine (in particular obtained by measuring sound generated by the wind turbine, or obtained instead based on knowledge or a model to predict how the noise will be, in particular then control actions are selected or performed based on this knowledge, e.g. the pitch cannot be set too aggressive or the rotational speed cannot be too large, if the acoustic noise emission should be small); a load parameter indicative of a mechanical/electronic required and/or actual load of the wind turbine; a thrust force a wind turbine tower is subjected to (in particular a thrust force on the rotor); an electrical current output by the wind turbine; an electrical voltage output by the wind turbine; an electrical active power output by the wind turbine; an electrical reactive power output by the wind turbine; a torque (in particular a generator is subjected to or a rotor blade acts on the generator); a rotational speed of a generator or a rotor of the wind turbine; a maximum power (such as a maximum power derived over a certain time interval in the past); an electrical reactive power requirement by a utility grid; and electrical active power requirement by a utility grid; an electrical voltage requirement by a utility grid, wherein the wind turbine is connected, in particular via a point of common coupling, to which a plurality of wind turbines may be connected, to the utility grid to provide electric energy to the utility grid); and/or an absolute limit value (in particular defining a limit value, which may not be exceeded due to general considerations).

The more operational parameters are considered, the higher the accuracy may be, with which the target value of the operational variable may be determined neither to select the target value too conservative and not to exceed the constraints. Thereby, the efficiency or amount of the power production may further be improved. In particular, considering the plurality of operational parameters, may enable to set the target value of the operational variable higher than a conventional target value of the operational variable.

According to an embodiment of the present invention, the determining unit is further adapted (in particular by providing an electronic circuit and/or a computer program module or computer program product) to determine the target value of the operational variable of the wind turbine by determining at least one constraint for the operational variable, wherein the constraint is determined based on the at least one operational parameter. Thereby, the arrangement and/or corresponding method may be simplified.

The determining the constraint may comprise modelling and/or monitoring and/or observing a wind turbine component and/or an external component external to the wind turbine. In particular, a constraint may be associated with a particular wind turbine component or an external component. Thereby the arrangement and/or method may be simplified and/or easily maintainable.

In particular, a component of the wind turbine may comprise a power converter(s) (in particular AC-DC-AC converter, or a AC-DC converter) for converting a variable frequency power signal to a fixed frequency power signal (or DC power signal); a generator for generating electrical energy by converting mechanical energy; a wind turbine transformer for transforming an electrical voltage output from the generator or the converter of the wind turbine; a gearbox coupled between a rotor and a generator; a drive train coupled between a rotor and a generator; a nacelle mounted on top of a tower, the nacelle supporting a rotor; a rotor blade coupled to a rotor of the wind turbine; a tower; a foundation; and/or an overall design component; and/or
a wind turbine controller. One or more or all of these components may provide or be associated with a particular constraint regarding the target value of the operational variable.

For example, depending on the at least one operational parameter, the (in particular AC-DC-AC or AC-DC) converter may require a constraint regarding the operational variable of the wind turbine. Another component of the wind turbine, such as the wind turbine transformer, may, based on the plurality of operational parameters, require another constraint for the operational variable. These different constraints for different wind turbine components and/or external components may be taken into account to derive the target value of the operational variable of the wind turbine.

In particular, for each wind turbine component and/or each external component, the arrangement may comprise a circuit module or software module modelling and/or monitoring and/or observing this particular component for associating a constraint therewith.

In particular, a rotor blade may be monitored by measuring vibrations of the rotor blade and/or movements of the rotor blade, which may be derived based on the operational parameters or may be derived based on measuring the vibrations of the rotor blade. Depending on the operational parameters defining the operational state of the rotor blade, the rotor blade may for example impose a particular constraint for the operational variable of the wind turbine.

In this manner, one or more wind turbine components or/and one or more external components may impose different constraints for the operational variable that affect the target value. By considering the particular constraints imposed by the different wind turbine components and different external components, the target value of the operational variable of the wind turbine may be set such that these wind turbine components and/or external components may not impaired by the operation of the wind turbine when operated according to the target value of the operational variable.

Thereby, the arrangement may be advantageously employed for controlling a wind turbine, without damaging the wind turbine or exceeding relevant constraints, while at the same time maximizing power production.

According to an embodiment of the present invention external component comprises one or more of the following: a wind farm transformer for transforming an electrical voltage provided at a point of common coupling to a grid voltage; a wind farm controller for controlling a plurality of wind turbines; a grid to which the wind turbine is connected; a weather station estimating and/or monitoring a weather condition; and/or a wind farm overall design controller.

Thereby, also constraints imposed by external components may be determined, such that appropriate operation of the external components may be ensured.

According to an embodiment of the present invention, the determining the target value of the operational variable of the wind turbine comprises determining a minimum of the at least one constraint. In particular, when a plurality of constraints is considered, the minimum is taken over the plurality of constraints. Thereby, constraints by any of the wind turbine components or external components may be satisfied by the determined target value, in order to avoid damaging the wind turbine component and external components.

According to an embodiment of the present invention, the determining unit is further adapted to change the target value of the operational variable of the wind turbine, if the at least one operational parameter changes. In particular, changing at least one of a plurality of operational parameters may involve that the determining unit changes the target value of the operational variable. Thereby, in particular, the target value of the operational variable is determined such that the power production is maximized.

According to an embodiment of the present invention, an arrangement for controlling a wind turbine is provided, wherein the arrangement comprises an arrangement for determining a target value (in particular maximal speed and maximal power) of an operational variable according to one of the embodiments as described above. Thereby, the arrangement for controlling the wind turbine further comprises an output terminal for supplying, to at least one operational component of the wind turbine, a (wind turbine actuator) control signal indicative of a control variable of the wind turbine, wherein the control signal is based on the target value of the operational variable.

Thereby, the arrangement for determining the target value may be advantageously be employed in an arrangement for controlling a wind turbine, in order to improve the efficiency of the wind turbine, while at the same time meeting constraints set by wind turbine components or external components.

According to an embodiment of the present invention, the operational component comprises a AC-DC-AC-converter and/or a generator (in particular coupled to the converter, wherein the converter and/or the generator supplies the electric energy generated by the wind turbine to a point of common coupling, which is in turn coupled to the utility grid); and/or a blade pitch system (adapted for adjusting a blade pitch angle of at least one rotor blade connected to a rotor of the wind turbine).

The operational component may be a component of the wind turbine, which enables setting or defining the operational state of the wind turbine (excluding the external conditions the wind turbine is subjected to, such as wind speed, temperature, humidity, air density, etc.).

Using an (in particular AC-DC-AC or AC-DC) converter the operational state of the wind turbine may be conveniently controlled. In particular, the converter may be supplied with a voltage control signal, a power control signal or torque control signal. In particular, the blade pitch system may be supplied with a pitch angle control signal defining an intended blade pitch angle of a rotor blade connected to the rotor of the wind turbine, wherein in particular the intended blade pitch angle, the voltage control signal, and/or the power control signal is based on the maximal speed and/or the maximal power.

In particular, the overall requirements of the wind turbine (or the wind turbine controller) may be represented by maximal power and maximal speed (in order not to exceed requirements for power, loads, noise). However, the turbine controller may have to control this itself using the available actuators (mainly power/torque, and blade pitch angle) in order to achieve a certain rotational speed. Hereby the blade pitch angles and power are controlled in order to track the maximal speed and maximal power.

If the maximal power (target power) is e.g. 3 MW, the power control signal sent to the converter or generator is not necessarily 3 MW, because at low wind speeds this power may not be obtainable and would just decelerate the rotor (rotational speed) very quickly. Even at rated power production the power control signal actually sent to the actuator may not have to be exactly 3 MW, since it may be a little larger or smaller and change over time in order to damp (actively) oscillations.

According to the control signal supplied to the operational component, the operational component may set its mechanical and/or electronic properties such as to meet the requirements defined by the control signal.

According to an embodiment of the arrangement for controlling a wind turbine, the control signal comprises a blade pitch angle related control signal (in particular being adapted to be supplied to the blade pitch angle system, which causes the rotor blade to rotate along its longitudinal axis to adapt its rotor blade pitch angle according to the control signal); a power-related operational control signal, in particular a power or a torque of the generator or converter of the wind turbine, and/or a yaw positions-related control signal (in particular specifying a rotational position of the nacelle mounted on top of the wind turbine tower, wherein the nacelle supports the rotor to which the rotor blades are mounted). By employing these control signals or one of these control signals, the wind turbine may be advantageously and conveniently controlled.

According to an embodiment, a wind turbine comprising an arrangement for determining a target value of an operational variable of a wind turbine or comprising an arrangement for controlling a wind turbine is provided. The wind turbine may generate more electrical energy than a conventional wind turbine.

According to an embodiment it is provided a method for determining a target value of an operational variable of a wind turbine, the method comprising: receiving at least one operational parameter of the wind turbine; and determining a target value of an operational variable of the wind turbine based on the operational parameter and in particular outputting a signal indicative of the target value.

It should be understood that features (individual or in any combination) disclosed, described, explained, employed for or provided for an arrangement for determining a target value of an operational variable of the wind turbine, may also (individually or in any combination) be applied to, provided for or employed for a method for determining a target value of an operational variable of a wind turbine and vice versa.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

By embodiments of the invention the wind turbine may be operated more closely at its constraints taking into consideration varying operating conditions and different requirements for the individual system components. The wind turbine has to act within the design specification by adjusting the target or maximal settings (known as set points or references, such as reference voltage, reference power or reference torque in the wind turbine controller, so that a maximum power/load/noise relationship is acquired. The design specification may involve the main system components and may include load requirements, temperature requirements, noise requirements, power requirements, etc.

To maximize the efficiency of the turbine it may be vital that the constraints are not too conservative, but they cannot be exceeded either, which is calling for adaptive constraints.

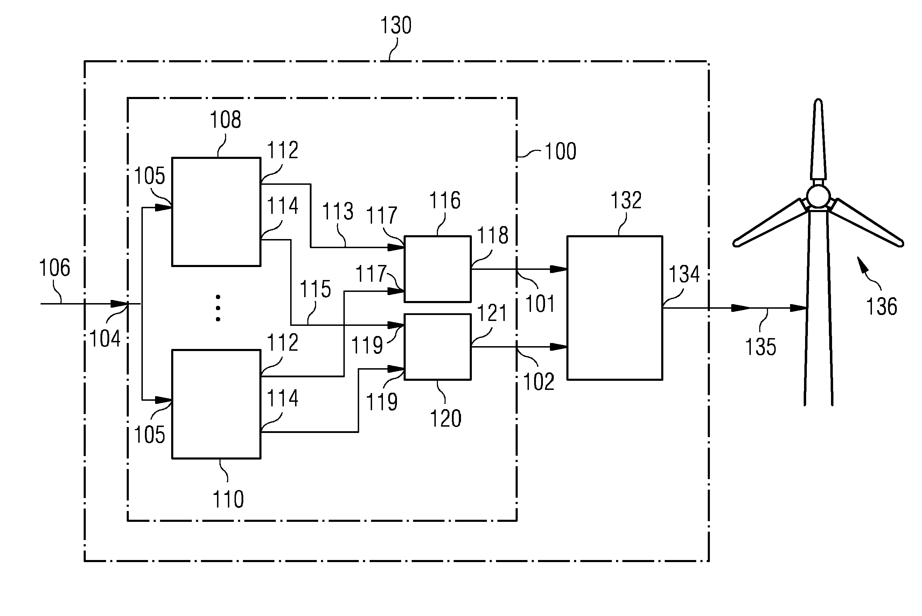

An embodiment of the present invention is now described with reference to the accompanying drawing. The invention is not restricted to the illustrated or described embodiment.

### Brief Description of the Drawings

The Figure schematically illustrates an arrangement for controlling a wind turbine according to an embodiment of the present invention.

### Detailed Description

The arrangement 130 for controlling a wind turbine according to an embodiment of the present invention comprises an arrangement 100 for determining a target value of an operational variable of a wind turbine according to an embodiment of the present invention.

The arrangement 100 for determining a target value of an operational variable, in particular a power set point or power reference and/or a speed set point or speed reference output at the output terminals 101 and 102, respectively, comprises an input terminal 104 for receiving at least one operational parameter 106, such as a temperature, a current, a voltage, active/reactive electrical power.

The arrangement 100 comprises a plurality of component modules (such as software modules or circuit sections) 108-110, which monitor or model different wind turbine components of the wind turbine, such as a converter, a generator, a transformer, a gearbox, a nacelle, a rotor blade, a tower, and external components external to the wind turbine, such as a wind turbine controller, a wind farm controller, an utility grid, a weather station and an overall design controller. Each component modelled by the component modules 108-110 requires a particular constraint regarding power (output at terminal 112) and speed (output at terminal 114) based on the operational parameter 106 received at the input terminals 105 of the component modules 108-110.

Some of the component modules 108-110 may output a power constraint at output terminal 112 and a speed constraint at output terminal 114, some of the component modules 108-110 may output only a power constraint at output terminal 112 and some of the component modules 108-110 will output only a speed constraint at output terminal 114 but no power constraint at output terminal 112.

The respective power constraints 113 output at output terminals 112 of the component modules 108-110 are supplied to a processing module 116, which is adapted to determine a minimum of all supplied power constraints 113 and outputs the minimum at an output terminal 118.

The speed constraints 115 output at output terminals 114 of the component modules 108-110 are supplied to another processing section 120, which calculates or computes the minimum of all supplied speed constraints 115 received at an input terminal 119.

The component modules 108-110 supply the constraints 113 (regarding power) and 115 (constraint regarding speed) to the processing modules 116 and 120. The processing modules 116 and 120 have output terminals 118 and 121, which provide the minimum of the power constraint and speed constraint, respectively, received from the component modules 108-110.

At the output terminal 101 the arrangement 100 for determining the target value of the operational variable outputs the target value of the power or power set point. At the output terminal 102, the arrangement 100 for determining the target value of the operational variable outputs the target value of the speed or the speed set point.

The arrangement 130 for controlling a wind turbine comprises the arrangement 100 for determining a target value of an operational variable and further comprises a control section 132, which receives the signals supplied to the output terminals 101 and 102 of the arrangement 100 for determining the target value of the operational variable.

Thus, the control sections 132 receives the power set point and the speed set point and computes based thereon a control signal 135 at an output terminal 134, wherein the control signal is indicative of a control variable, such as a blade pitch related control signal, a power-related operational control signal and/or a yaw position related control signal.

The control signal 135 output at the output terminal 134 is supplied to a wind turbine 136, in particular to a converter and/or to a generator and/or to a blade pitch system of the wind turbine 136. The control signal 135 received by the wind turbine 136 is used to control the operational state of the wind turbine 136, in particular regarding power production, output voltage, reactive power output and/or active power output such that the wind turbine satisfies to have a power production below the power reference output at terminal 101 and to have a speed below the speed reference output at terminal 102.

The arrangement 130 for controlling a wind turbine may be a component of the wind turbine 136. The arrangement 130 supplies the control signal 135 to the wind turbine 136, in order to set the operational state of the wind turbine 136.

Embodiments of the invention feature a paradigm shift, where a wind turbine may no longer operate according to fixed set points, but will adapt online to the conditions of the individual system components.

Conventionally, a turbine may have a target power of e.g. 2000 kW which may be a compromise between maximizing electrical power and reducing loads. This means that 2000 kW will be the rated power no matter the conditions. According to an embodiment of the present invention however, the turbine may be able to produce e.g. 2200 kW, if the temperature is low, since this may assure effective cooling of the electrical system (the converter, generator, transformer). In another example the rated speed (and/or power) may be increased due to low vibration level in the turbine.

Below some exemplary system components are listed which may limit the speed and/or power reference and which may define individual constraints. The words in parentheses denote the factors which may influence the speed and/or power reference.

| | |
|---|---|
| Converter | (temperature, current, voltage, active/reactive electrical power) |
| Generator | (temperature, current, voltage, active/reactive electrical power, rotational speed) |
| Transformer | (temperature, current, voltage, active/reactive electrical power) |
| Gearbox / drive train: | (torque, rotational speed, vibrations, temperature) |
| Nacelle: | (vibrations, temperature) |
| Blades | (rotational speed, vibrations, deflection in particular of the tip, ice) |
| Tower | (thrust, vibrations) |
| Wind farm controller | (maximum power, noise requirements, visual requirements) |
| Grid | (power requirements, voltage requirements) |
| Weather station | (ambient temperature, turbulence, air density, humidity, shear) |
| Overall design | (Absolute maximum limits) |

This invention may introduce a paradigm shift in the way a turbine is operated and constraint, compared to the traditional approach. According to an embodiment of the present invention the following is performed and/or achieved:
- Operate a turbine at (up to) its true constraints according to the conditions on the turbine.
- Go closer to the design limits without exceeding them.
- Fulfil the full potential of the turbine and hereby increase energy production in a safe manner.
- Avoid the conservatism in the traditional design and avoid risk if conditions change to the worse.
- Set the target set points of a wind turbine controller in a systematic way.

The controller (such as controller 100 and/or 130) may still have absolute maximum set points, which cannot be exceeded due to safety.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (100) for determining a target value of an operational variable of a wind turbine (136), the arrangement comprising:
- at least one input terminal (104) for receiving at least one operational parameter (106) of the wind turbine;
- a determining unit (108, 110, 116, 120) adapted to determine a target value of an operational variable of the wind turbine based on the operational parameter.

2. Arrangement according to clam 1, wherein the operational variable comprises:
- a power related operational variable, in particular a power or a torque of the generator or converter of the wind turbine, and/or
- a rotational speed related operational variable, in particular a generator speed or a rotor speed.

3. Arrangement according to clam 1 or 2, wherein the operational parameter of the wind turbine comprises:
- an ambient temperature;
- a wind speed;
- an icing condition;
- a air turbulence;
- an air density;
- an air humidity;
- a vibration condition or level of the wind turbine, in particular a blade vibration;
- a noise parameter indicative of a required and/or actual or estimated noise generated by the wind turbine;
- a load parameter indicative of a mechanical/electronic required and/or actual load of the wind turbine;
- a thrust a wind turbine tower is subjected to;
- an electrical current;
- an electrical voltage;
- an electrical active power output by the wind turbine;
- an electrical reactive power output by the wind turbine;
- a torque;
- a rotational speed of a generator or rotor of the wind turbine;
- a maximum power;
- an electrical reactive power requirement by an utility grid;
- an electrical active power requirement by an utility grid;
- an electrical voltage requirement by an utility grid;
and/or
- an absolute limit value.

4. Arrangement according to any one of the preceding claims, wherein the determining unit is further adapted to determine the target value of the operational variable of the wind turbine by determining at least one constraint (113, 115) for the operational variable, wherein the constraint is based on the at least one operational parameter (106).

5. Arrangement according to the preceding claim, wherein the determining the constraint (113, 115) comprises modelling and/or monitoring and/or observing a wind turbine component and/or an external component external to the wind turbine.

6. Arrangement according to the preceding claim, wherein the wind turbine component comprises:
- an converter for converting a variable frequency power signal to a fixed frequency power signal or direct current;
- a generator for generating electrical energy by converting mechanical energy;
- a wind turbine transformer for transforming an electrical voltage output from the generator or the converter of the wind turbine;
- a gearbox coupled between a rotor and a generator;
- a drive train coupled between a rotor and a generator;
- a nacelle mounted on top of a tower, the nacelle supporting a rotor;
- a rotor blade coupled to a rotor of the wind turbine;
- a tower;
- a foundation; and/or
- an overall design component.

7. Arrangement according to claim 5 or 6, wherein the external component comprises:
- a wind farm transformer for transforming an electrical voltage provided at a point of common coupling to a grid voltage;
- a wind farm controller for controlling a plurality of wind turbines;
- a grid to which the wind turbine is connected;
- a weather station estimating and/or monitoring a weather condition; and/or
- a wind farm overall design controller.

8. Arrangement according to one of claims 4 to 7, wherein determining the target value of the operational variable of the wind turbine comprises determining a minimum of the at least one constraint.

9. Arrangement according to one of the preceding claims, wherein the determining unit is adapted to change the target value of the operational variable of the wind turbine, if the operational parameter changes.

10. Arrangement (130) for controlling a wind turbine, the arrangement comprising:
- an arrangement (100) for determining a target value of an operational variable according to one of the preceding claims, wherein the arrangement for controlling the wind turbine further comprises:
- an output terminal (134) for supplying, to at least one operational component of the wind turbine (136), a control signal (135) indicative of a control variable of the wind turbine, wherein the control signal is based on the target value of the operational variable.

11. Arrangement for controlling a wind turbine according to the preceding claim, wherein the operational component comprises:
- a converter and/or a generator; and/or
- a blade pitch system.

12. Arrangement for controlling a wind turbine according to claim 10 or 11, wherein the control signal comprises:
- a blade pitch related control signal;
- a power related operational control signal, in particular a power or a torque of the generator or converter of the wind turbine, and/or
- a yaw position related control signal.

13. Wind turbine (136) comprising an arrangement according to one of the preceding claims.

14. Method for determining a target value of an operational variable of a wind turbine, the method comprising:
- receiving at least one operational parameter of the wind turbine;
- determining a target value of an operational variable of the wind turbine based on the operational parameter(s).
